# FASCICULE DE BREVET EUROPEEN

(11) **EP 4 347 297 B1**
(45) Date de publication et mention de la délivrance du brevet: **24.12.2025**
(21) Numéro de dépôt: 22730537.2
(22) Date de dépôt: 27.05.2022
(51) Int. Cl.: B60K 15/077, B65D 90/52

(54) **BAFFLE ANTI-BRUIT POUR RÉSERVOIR DE VÉHICULE AUTOMOBILE**
GERÄUSCHDÄMPFUNGSVORRICHTUNG FÜR EINEN KRAFTFAHRZEUGTANK
NOISE ATTENUATION DEVICE FOR A MOTOR VEHICLE TANK

(30) Priorité: 27.05.2021 LU 500212
(43) Date de publication de la demande: 10.04.2024
(73) Titulaire: OPmobility C-Power Belgium Research, 1200 Woluwe-Saint-Lambert (BE)
(72) Inventeur: LEMAIRE, Jean-Christophe, 1130 BRUXELLES (BE); YOO, In-Moo, 1130 BRUXELLES (BE)
(74) Mandataire: LLR
(86) Numéro de dépôt international: PCT/EP2022/064462
(87) Numéro de publication internationale: WO 2022/248697

(56) Documents cités:
- EP-A1- 1 990 226
- CN-A- 112 428 819
- DE-U1- 202018 101 633
- JP-A- 2005 170 084
- JP-A- 2006 264 580

## Description

L'invention concerne un baffle anti-bruit pour réservoir de véhicule automobile, un réservoir contenant ce baffle et un procédé d'installation du baffle dans le réservoir. Le réservoir est un réservoir d'un liquide de fonctionnement du véhicule, c'est-à-dire par exemple un carburant, une solution d'urée, de l'eau, de l'hydrogène liquide, du liquide de frein, du liquide lave-glace, .... Plus particulièrement, l'invention concerne un baffle anti-bruit comprenant au moins deux panneaux.

On connaît déjà du document JP2005170084 un baffle anti-bruit comprenant au moins deux panneaux.

Les baffles anti-bruit ont pour but d'atténuer le bruit (« slosh noise ») associé aux vagues de liquide qui peuvent être générées au sein du réservoir lorsque le véhicule accélère, freine ou prend des virages. De tels baffles sont également appelés baffles anti-slosh dans le jargon du métier. Ils exercent un effet anti-ballottement, c'est-à-dire qu'ils limitent le mouvement du liquide dans le réservoir. Dans la suite, baffle anti-bruit, baffle anti-slosh et baffle anti-ballotement sont appelés « baffle ».

Les baffles anti-bruit sont fixés dans le réservoir à la paroi supérieure ou inférieure de celui-ci.

Classiquement, dans le cas des réservoirs en plastique obtenus par extrusion-soufflage, le baffle anti-bruit est introduit et fixé dans le réservoir après la fabrication de ce dernier, à travers une ouverture réalisée dans la paroi de celui-ci. On utilise par exemple une ouverture à travers laquelle un module de pompage est introduit et fixé à l'intérieur du réservoir, et qui est par la suite refermé par une embase. Cependant cette façon d'introduire un baffle dans un réservoir est difficilement utilisable pour un baffle de forme complexe. En effet, afin de contrôler les pertes évaporatives, on limite au maximum les dimensions de l'ouverture pratiquée dans le réservoir et le nombre de ces ouvertures. Cette façon d'introduire les baffles est donc, en général, réservée aux baffles de petites dimensions et de forme simple. Si nécessaire, plusieurs baffles de forme simple, généralement plates, sont introduits.

Il est également connu d'introduire le baffle anti-bruit dans le réservoir lors même de sa fabrication par extrusion-soufflage d'une paraison tubulaire autour d'un tel baffle et fixation de ce dernier après ou avant soufflage. De cette façon, on peut introduire dans le réservoir des baffles de forme complexe, comme par exemple des baffles comprenant au moins deux panneaux. Cependant cette technique d'obtention et d'installation des baffles est complexe et onéreuse. Les baffles utilisés dans cette technique, de forme complexe, sont également plus lourds, ce qui est désavantageux pour un composant destiné à être embarqué à bord d'un véhicule.

L'invention a notamment pour but de fournir un baffle anti-bruit comprenant au moins deux panneaux, dont l'insertion dans le réservoir est simple et bon marché.

A cet effet, l'invention a pour objet un baffle anti-bruit pour un réservoir d'un véhicule automobile destiné à recevoir un liquide de fonctionnement du véhicule. Le baffle :
- comprend au moins deux panneaux, et
- comprend au moins une charnière venue de moulage avec les autres parties du baffle. Le baffle est déformable entre :
- une configuration initiale dans laquelle le baffle n'est pas plié le long de la au moins une charnière,
- une configuration pliée dans laquelle le baffle est plié le long de la au moins une charnière, et
- une configuration finale dans laquelle le baffle est déplié le long de la au moins une charnière,
de sorte que, en configuration pliée, le baffle peut être introduit dans le réservoir par une ouverture de celui-ci.

L'invention se caractérise en ce que le baffle anti-bruit comprend en outre :
- un premier moyen de fixation formé dans le prolongement d'un premier panneau,
- une deuxième charnière séparant le premier panneau du premier moyen de fixation, et
- un deuxième moyen de fixation complémentaire du premier moyen de fixation, formé dans le prolongement d'un deuxième panneau adjacent au premier panneau, le premier moyen de fixation et le deuxième moyen de fixation étant agencés de sorte que lorsque le premier moyen de fixation est plié vers le premier panneau de manière à former avec celui-ci un angle différant de 180°, et lorsque le premier panneau et le deuxième panneau sont dans la configuration finale, les premiers et deuxièmes moyens de fixation sont automatiquement rapprochés pour être fixés les uns aux autres.

Dans l'invention, l'expression « deux panneaux » désigne deux panneaux s'étendant, dans la configuration finale, dans un plan différent l'un de l'autre. Le terme « panneau » désigne une partie du baffle capable d'avoir un effet anti-ballottement.

La charnière est venue de moulage avec les autres parties du baffle. Elle permet un déplacement angulaire relatif de deux parties du baffle qu'elle sépare, précisément selon l'axe longitudinal de la charnière en une position prédéfinie. On considère que des parties du baffle sont venues de moulage lorsqu'elles sont obtenues ensemble lors d'un même moulage, et qu'elles forment ensemble une seule pièce dont les parties ne peuvent pas être dissociées de manière réversible.

On entend par « configuration finale » une configuration que prend le baffle quand il est installé dans le réservoir après son dépliage.

On considère que le baffle est plié le long de la charnière lorsque l'angle formé entre les deux parties de baffle que la charnière sépare est plus petit en configuration pliée qu'en configuration finale. De préférence, cet angle est nul en configuration pliée, ainsi les deux parties de baffle sont rabattues l'une contre l'autre en configuration pliée. De même, en configuration initiale, cet angle est plus grand qu'en configuration pliée. De préférence, cet angle est plat en configuration initiale (approximativement 180°).

On comprend donc que dans la configuration pliée, le baffle selon l'invention présente une de ses dimensions totales diminuée par rapport à cette dimension totale en configuration finale.

Ainsi, cette solution permet de fournir un baffle anti-bruit présentant une forme complexe, facilement fabriqué et facilement installé. En effet, le baffle est fabriqué sous une forme simple, par exemple une forme plate. Il peut donc être fabriqué par moulage par injection plastique, de façon peu onéreuse. La forme complexe peut être obtenue après injection plastique, par pliage. Par ailleurs grâce à la charnière, le baffle peut être introduit par une ouverture du réservoir, ce qui est plus simple et moins onéreux que l'introduction du baffle lors de la fabrication du réservoir.

De plus, s'agissant d'un baffle constitué d'au moins deux panneaux, cela permet de réduire le nombre de baffles à introduire dans le réservoir et, dans certains cas, le nombre d'ouvertures pratiquées dans le réservoir. Un unique baffle peut suffire, là où deux baffles plats auraient pu être nécessaires pour obtenir un effet anti-bruit suffisant. Par rapport à un système de deux baffles plats, on diminue le nombre de points de fixation du fait que les deux panneaux sont solidaires entre eux et, dans certains cas, on réduit aussi le nombre d'ouvertures pratiquées dans le réservoir. Ainsi, on réduit le nombre de moyens de fixation du baffle à la paroi du réservoir, le nombre d'opérations de découpe et de soudage, les ouvertures du réservoir et on simplifie l'assemblage dans le réservoir, aboutissant à un temps de production réduit, une production moins onéreuse et des pertes évaporatives moins importantes.

De préférence, les autres dimensions totales du baffle, différentes de celle diminuée en configuration pliée, sont inchangées entre les configurations pliée et finale. En effet lors de l'insertion dans le réservoir, le baffle doit présenter à l'ouverture du réservoir une section dont aucune des dimensions n'excède celles de l'ouverture, mais aussi en configuration pliée, son autre dimension ne doit pas être augmentée. Cela facilite et améliore l'introduction et l'installation dans le réservoir.

De préférence, la charnière s'étend dans la hauteur du baffle, c'est à dire dans une direction du baffle substantiellement perpendiculaire aux parois supérieure et inférieure du réservoir, qui sont respectivement la paroi la plus éloignée du sol et la moins éloignée du sol lorsque le réservoir est inséré dans le véhicule.

De façon avantageuse, le baffle selon l'invention est moulé par injection plastique. Il s'agit d'une technique simple, rapide et peu onéreuse de fabrication. Si des formes plus complexes étaient requises, par exemple dans le cas d'un réservoir de grande taille et / ou de forme complexe, il serait plus avantageux d'installer plusieurs baffles selon l'invention, présentant chacun une forme peu complexe.

De façon avantageuse, la charnière est formée par une réduction d'épaisseur de la paroi du baffle du côté opposé au côté où l'on diminue l'angle pour atteindre sa configuration pliée, cela permet, lorsque l'angle formé entre les deux parties de baffle est nul en configuration pliée, d'atteindre la configuration pliée sans interférence de matière entre les deux parties du baffle. Alternativement, lorsque l'angle formé entre les deux parties de baffle n'est pas nul en configuration pliée, la charnière est formée par une réduction d'épaisseur de la paroi du baffle, au choix, du côté où l'on diminue l'angle pour atteindre sa configuration pliée, du côté opposé au côté où l'on diminue l'angle pour atteindre sa configuration pliée, ou des deux côtés de la paroi du baffle.

Le baffle est avantageusement formé dans un matériau capable de résister à au moins un pliage et un dépliage, ainsi qu'au liquide de fonctionnement du véhicule contenu dans le réservoir. A cet effet, un polyamide tel que les PA66 et PA6, un polyéthylène ou un polypropylène peuvent, par exemple, être choisis.

Suivant d'autres caractéristiques optionnelles du baffle anti-bruit, prises seules ou en combinaison :
- la au moins une charnière sépare deux panneaux adjacents l'un de l'autre. Ainsi, à partir d'un baffle fabriqué sous une forme simple, par exemple une forme plate, deux ensembles de panneaux peuvent être pliés l'un contre l'autre, ou bien deux ensembles de panneaux peuvent être pliés chacun sur un ensemble central de panneaux, afin de faciliter l'introduction du baffle par l'ouverture du réservoir. Un ensemble de panneaux comprend au moins un panneau, ou un minimum de deux panneaux adjacents. Dans ce mode de réalisation, l'angle formé entre les deux parties séparées par la charnière est plus grand en configuration initiale qu'en configuration finale.
- la au moins une charnière sépare deux parties adjacentes d'un même panneau. Ceci est particulièrement avantageux pour un baffle dont les panneaux forment une structure fermée, telle que par exemple un parallélépipède, car cela permet de rapprocher au moins deux panneaux d'un baffle par pliage d'un troisième panneau ou par pliage de deux autres panneaux. Dans ce mode de réalisation, l'angle formé entre les deux parties séparées par la charnière est identique en configuration initiale et en configuration finale.

Dans un mode de réalisation, le baffle est moulé dans sa configuration initiale. On fait ainsi l'économie d'une étape de fermeture de la structure.

Dans un autre mode de réalisation, le baffle est fabriqué sous une forme simple, par exemple, le baffle est moulé sous une forme plate. Pour obtenir le baffle dans sa configuration initiale, on plie la forme plate le long de lignes de séparation entre deux panneaux adjacents du baffle. Si nécessaire pour obtenir une structure fermée, deux extrémités opposées de la forme plate sont assemblées entre elles au niveau d'éléments d'assemblage. Le baffle comprend donc à deux extrémités opposées des éléments d'assemblage aptes à coopérer entre eux pour engager l'assemblage. De préférence, les éléments d'assemblage sont pourvus de formes complémentaires aptes à coopérer entre elles pour engager l'assemblage. L'assemblage est ainsi réalisé de manière à obtenir une structure fermée. On entend par « structure fermée » une structure entièrement délimitée par des panneaux au sens de l'invention.
- l'angle différant de 180° est d'environ 90°. Ceci permet de bloquer les mouvements relatifs des panneaux du baffle, bloquant celui-ci dans sa configuration finale. Ceci permet encore de diminuer le nombre de points de fixation du baffle à la paroi du réservoir.
- au moins un panneau comprend un élément destiné à assurer la fixation du baffle à une paroi de réservoir. De façon préférée, la paroi est une paroi supérieure du réservoir. Elle peut également être une paroi inférieure du réservoir.

L'invention a également pour objet un réservoir d'un véhicule automobile destiné à recevoir un liquide de fonctionnement du véhicule comprenant un baffle anti-bruit selon l'une quelconque des revendications précédentes, dans lequel le baffle est dans sa configuration finale. On comprend que le réservoir comporte une ouverture permettant l'introduction du baffle anti-bruit dans sa configuration pliée.

Suivant une caractéristique optionnelle, le baffle est fixé à une paroi du réservoir, et de façon avantageuse, la charnière du baffle est perpendiculaire à ladite paroi. L'orientation de la charnière, perpendiculaire à la paroi du réservoir à laquelle le baffle est fixé, permet d'obtenir des baffles de configurations finales très variées, avec des angles variables entre les panneaux. Par exemple les baffles ainsi obtenus peuvent présenter des structures en forme de Z, H, Y, T, ou I.

L'invention a encore pour objet un procédé d'installation d'un baffle anti-bruit tel que décrit ci-avant. Le procédé d'installation comprend les étapes suivantes :
- on plie le baffle le long de la au moins une charnière,
- on introduit le baffle en configuration pliée dans le réservoir à travers une ouverture de celui-ci,
- on déplie le baffle le long de la au moins une charnière afin que le baffle soit en configuration finale.

Un tel procédé est simple et rapide, ne nécessitant pas un équipement complexe ni de pièces supplémentaires pour faire passer le baffle de sa configuration initiale à sa configuration pliée puis à sa configuration finale.

Suivant une caractéristique optionnelle, le procédé comprend en outre une étape ultérieure de fixation du baffle à au moins une paroi du réservoir. La fixation peut être effectuée par collage, rivetage, vissage, bouterollage, ou toute autre technique de fixation utilisée habituellement par l'homme du métier.

### Brève description des figures

L'invention sera mieux comprise à la lecture de la description qui va suivre donnée uniquement à titre d'exemple et faite en se référant aux dessins annexés dans lesquels :
la figure 1 est une vue en transparence en perspective d'un réservoir d'un véhicule automobile comprenant un baffle anti-bruit selon un premier mode de réalisation l'invention ;
la figure 2 est une vue de face du baffle représenté sur la figure 1, dans sa configuration initiale ;
la figure 3 est une vue en perspective du baffle représenté sur la figure 1, dans sa configuration pliée ;
la figure 4 est une vue en perspective du baffle représenté sur la figure 1, représenté dans une configuration intermédiaire entre sa configuration pliée et sa configuration finale ;
la figure 5 est une vue en perspective du baffle représenté sur la figure 1, dans sa configuration finale ;
la figure 6 est une vue schématique du réservoir de la figure 1 dans lequel on introduit le baffle en configuration pliée ;
la figure 7 est une vue de face d'un baffle anti-bruit selon un deuxième mode de réalisation de l'invention, dans sa configuration initiale ;
la figure 8 est une vue en perspective du baffle représenté sur la figure 7, dans sa configuration pliée ;
les figures 9 et 10 sont des vues en perspective du baffle représenté sur la figure 7, dans des configurations intermédiaires entre sa configuration pliée et sa configuration finale ;
la figure 11 est une vue en perspective du baffle représenté sur la figure 7, dans sa configuration finale ;
la figure 12 est une vue de dessus du baffle représenté sur la figure 7, dans sa configuration pliée ;
la figure 13 est une vue de dessus du baffle représenté sur la figure 7, représenté dans une configuration intermédiaire entre sa configuration pliée et sa configuration finale ;
la figure 14 est une vue de dessus du baffle représenté sur la figure 7, dans sa configuration finale ;
les figures 15 à 22 sont des vues de dessus en transparence d'exemples de réservoirs de véhicules automobiles selon l'invention.

### Description détaillée

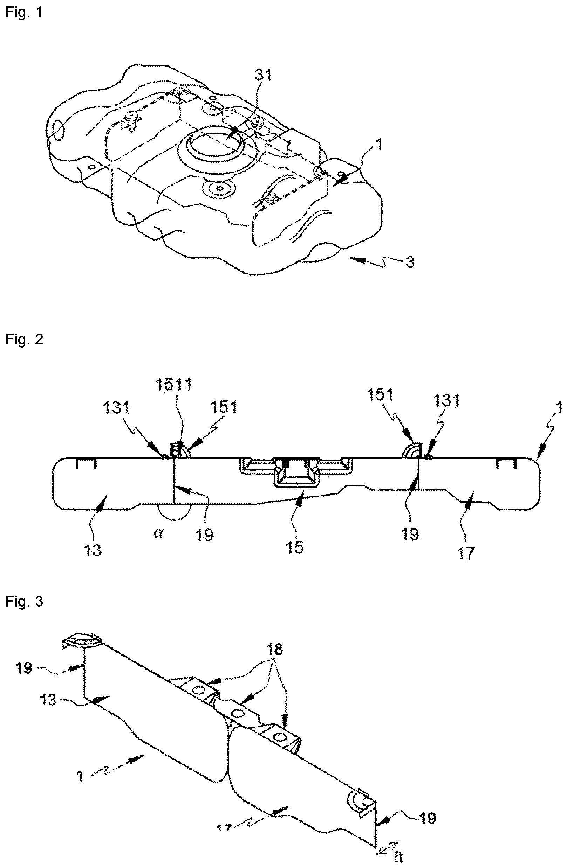

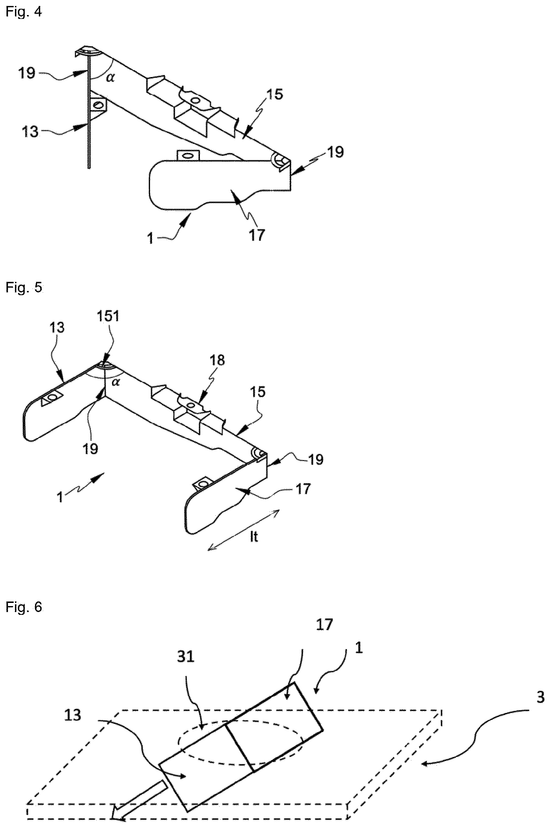

On a représenté sur les figures 1 à 6 un baffle anti-bruit selon un premier mode de réalisation de l'invention, désigné par la référence générale 1. Dans la figure 1, le baffle 1 est représenté dans un réservoir 3 d'un véhicule automobile. Le réservoir 3 est destiné à recevoir un liquide de fonctionnement du véhicule. Le baffle 1 est venu de moulage. Il comprend au moins deux panneaux, ici trois panneaux 13, 15 et 17, et au moins une charnière, ici deux charnières 19. Le baffle 1 comprend aussi deux premiers moyens de fixation 151 formés dans le prolongement du premier panneau 15 et une deuxième charnière 1511 séparant le premier panneau 15 de chaque premier moyen de fixation 151. Deux deuxièmes moyens de fixation 131 complémentaire du premier moyen de fixation 151, sont formés, l'un dans le prolongement d'un deuxième panneau 13 adjacent au premier panneau 15, l'autre dans le prolongement d'un deuxième panneau 17 adjacent au premier panneau 15. Le baffle 1 comprend enfin trois éléments de fixation 18 destinés à assurer la fixation du baffle 1 à la paroi supérieure du réservoir 3. Le baffle 1 est déformable entre :
- une configuration initiale (figure 2) dans laquelle le baffle 1 n'est pas plié le long des charnières 19,
- une configuration pliée (figure 3) dans laquelle le baffle 1 est plié le long des charnières 19, et
- une configuration finale (figure 5) dans laquelle le baffle 1 est déplié le long des charnières 19.

Dans la configuration finale, les panneaux 13, 15, 17 s'étendent dans un plan différent l'un de l'autre. Chacun de ces panneaux est capable d'exercer un effet anti-ballottement. La charnière 19 permet un déplacement angulaire relatif de deux parties du baffle, ici deux panneaux 13 versus 15, et 15 versus 17, qu'elle sépare, précisément selon l'axe longitudinal de la charnière, en une position prédéfinie. L'angle α formé entre les deux parties de baffle que la charnière 19 sépare, montré en figure 5 entre les panneaux 13 et 15, est plus petit en configuration pliée qu'en configuration finale. La charnière 19 est formée par une réduction d'épaisseur de la paroi du baffle du côté opposé au côté où l'on diminue l'angle α pour atteindre sa configuration pliée. Sur la figure 2, on comprend que la paroi du baffle a son épaisseur réduite du côté opposé au côté représenté, pour former les charnières 19.

La figure 4 représente le baffle 1 dans une configuration intermédiaire entre sa configuration pliée et sa configuration finale. L'angle α y est plus petit qu'en configuration finale. En configuration initiale, l'angle α est plus grand qu'en configuration pliée.

La charnière 19 s'étend dans la hauteur du baffle 1 lorsque celui-ci est installé dans le réservoir 3.

Comme illustré sur les figures 2 à 5, dans la configuration pliée, le baffle 1 présente une de ses dimensions totales, ici sa largueur totale It, diminuée par rapport à sa largeur totale en configuration finale. En configuration pliée, sa largeur totale n'est pas augmentée par rapport à sa largeur totale en configuration finale.

En configuration pliée, le baffle 1 peut être introduit dans le réservoir 3 par une ouverture 31 de celui-ci.

Un premier moyen de fixation 151 et un deuxième moyen de fixation 131 sont agencés de sorte que lorsque le premier moyen de fixation 151 est plié vers le premier panneau 15 de manière à former avec celui-ci un angle d'environ 90°, et lorsque le premier panneau 15 et le deuxième panneau 13 ou 17 sont dans la configuration finale (figure 5), les premiers 151 et deuxièmes 131 moyens de fixation sont automatiquement rapprochés pour être fixés les uns aux autres. Dans ce mode réalisation, le moyen 151 est une équerre munie d'une fente pour permettre le coulissement du moyen 131 qui est un ergot.

Le baffle 1 est moulé par injection plastique sous une forme plate, représentée à la figure 2.

Son installation dans le réservoir 3 de véhicule automobile s'effectue de la manière suivante. On plie le baffle 1 le long de la au moins une charnière 19, on introduit (figure 6) le baffle 1 en configuration pliée dans le réservoir 3 à travers l'ouverture 31, puis on déplie le baffle 1 le long de la au moins une charnière 19 afin que le baffle 1 soit en configuration finale.

Dans ce mode de réalisation, avant, après, ou de façon simultanée au pliage pour obtenir la configuration pliée, on plie les premiers moyens de fixation 151 vers le premier panneau 15 de manière à former avec celui-ci un angle d'environ 90°, comme visible par exemple sur la figure 3. Lorsque le premier panneau 15 et les deuxièmes panneaux 13, 17 sont dans la configuration finale, les premiers moyens de fixation 151 et les deuxièmes moyens de fixation 131 sont automatiquement rapprochés pour être fixés les uns aux autres. Par la suite, on fixe le baffle 1 à au moins une paroi du réservoir 3, plus précisément à la paroi supérieure du réservoir, par l'intermédiaire des éléments de fixation 18.

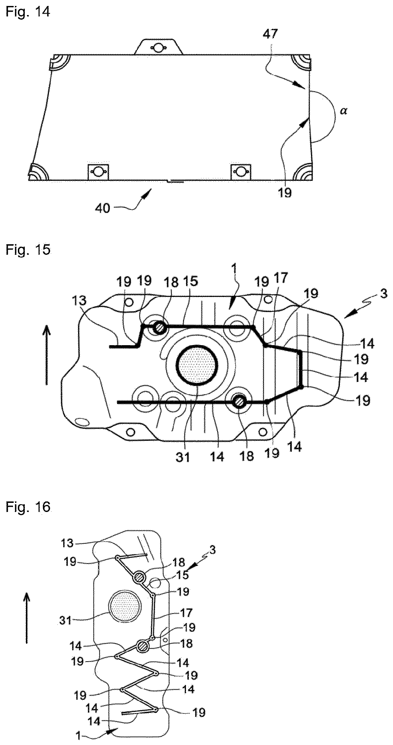

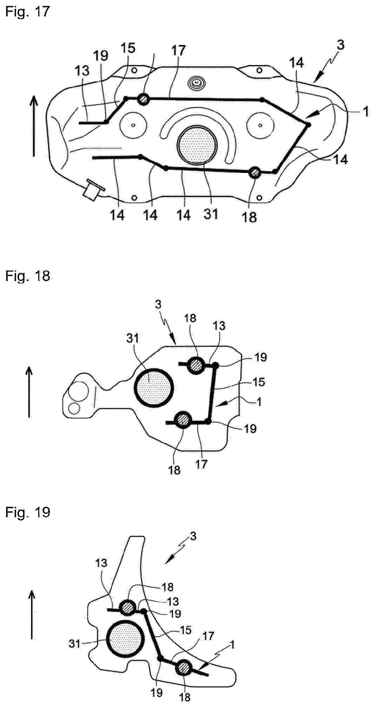

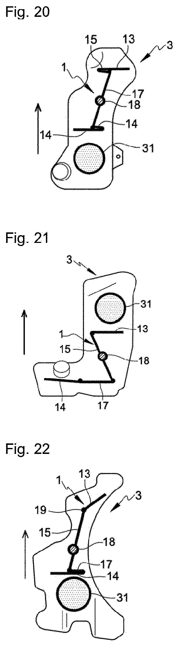

Les figures 15 à 22 montrent différents exemples de réservoirs illustrant le premier mode de réalisation de l'invention. Dans ces exemples, les composants identiques portent les mêmes numéros de référence. Les figures 15 à 17 représentent des réservoirs de carburant. Les figures 18 à 22 représentent des réservoirs d'une solution d'urée pour systèmes SCR. Sur chaque figure, la flèche illustre l'axe longitudinal du véhicule. Dans ces exemples, lorsque le baffle 1 comprend plus de trois panneaux 13, 15, 17, les panneaux excédentaires portent la référence 14. Dans les figures 15 à 17, l'ouverture 31 est celle à travers laquelle un module de pompage de carburant est introduit et fixé à l'intérieur du réservoir. Dans les figures 18 à 22, l'ouverture 31 est celle à travers laquelle un module de pompage d'une solution d'urée est introduit et fixé à l'intérieur du réservoir. Dans ces exemples, au moins un panneau comprend un élément 18 de fixation du baffle 1 à une paroi du réservoir représentée sur chaque figure. Les charnières 19 sont perpendiculaires à ladite paroi. Cette orientation des charnières 19, perpendiculaires à la paroi du réservoir, permet d'obtenir des baffles de configurations finales très variées, avec des angles variables entre les panneaux, comme l'illustrent les différents exemples représentés. On identifie par exemple sur la figure 21 une structure en forme de Z.

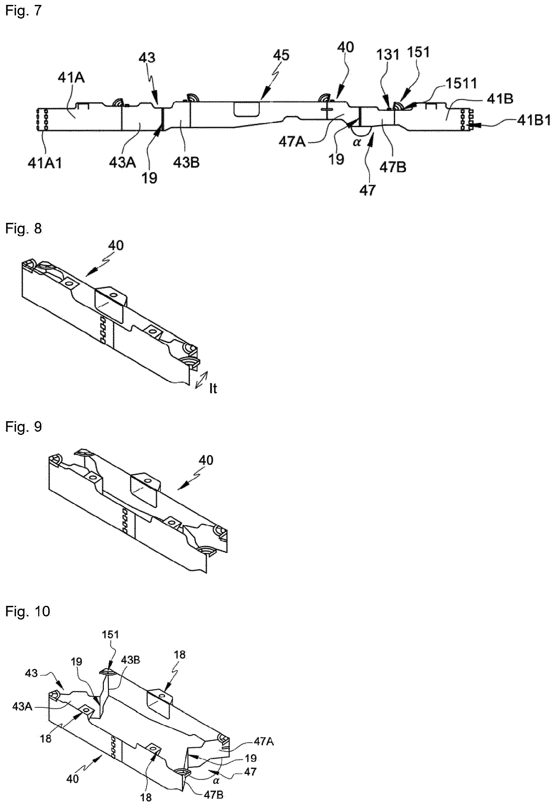

On a représenté en référence aux figures 7 à 14 un baffle 40 conforme à un deuxième mode de réalisation de l'invention. Ce mode de réalisation est semblable en de nombreux points au premier mode de réalisation, et les composants identiques portent les mêmes numéros de référence. Le baffle 40 comprend quatre panneaux 41, 43, 45 et 47.

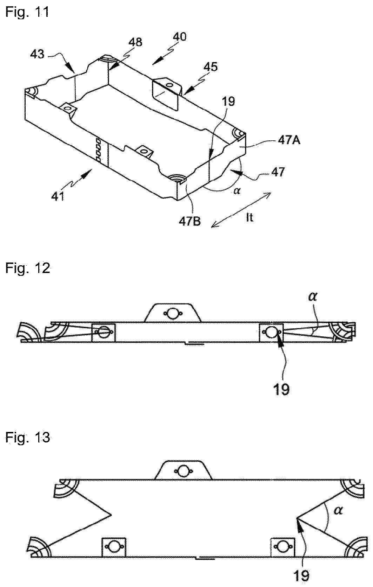

Dans la variante de ce mode de réalisation représentée aux figures 7 à 14, le baffle 40 est fabriqué sous une forme plate montrée à la figure 7. Le panneau 41 est obtenu par assemblage des parties 41A et 41B, constituant chacune une des extrémités de la forme plate, qui sont assemblées entre elles au niveau d'éléments d'assemblage 41A1 et 41B1. Dans le mode de réalisation représenté, les éléments d'assemblage 41A1 et 41B1 comprennent des formes complémentaires comme un ensemble d'éléments mâles et d'éléments femelles aptes à coopérer mutuellement pour engager l'assemblage. De préférence, les éléments mâles sont des pattes élastiques et les éléments femelles sont des encoches. Pour obtenir le baffle dans sa configuration initiale (visible aux figures 11 et 14), à partir de la forme plate, on plie la forme plate le long de lignes de séparation 48 entre les panneaux 41, 43, 45 et 47. Les figures 11 et 14 représentent également le baffle dans sa configuration finale.

Dans une variante non représentée, le baffle est moulé dans sa configuration initiale.

Les premiers moyens de fixation 151 sont au nombre de quatre. Ils sont chacun formés dans le prolongement d'un premier panneau 41 ou 45. Les deuxièmes moyens de fixation 131 sont au nombre de quatre. Ils sont formés chacun dans le prolongement d'un deuxième panneau 43 ou 47. La charnière 19 permet un déplacement angulaire relatif de deux parties du baffle, ici deux parties adjacentes 43A, 43B et 47A, 47B d'un même panneau 43 ou 47, qu'elle sépare, précisément selon l'axe longitudinal de la charnière 19, en une position prédéfinie. Dans ce mode de réalisation, l'angle α formé entre les deux parties de baffle que la charnière 19 sépare, illustré sur les figures entre les parties 47A et 47B, est identique en configuration initiale et en configuration finale (toutes deux représentées aux figures 11 et 14).

Dans la configuration finale, les panneaux 41, 43, 45 et 47 s'étendent dans un plan différent l'un de l'autre. Chacun de ces panneaux est capable d'exercer un effet anti-ballottement. La charnière 19 s'étend dans la hauteur du baffle 40 lorsque celui-ci est installé dans le réservoir.

Comme illustré sur les figures 8 à 11, dans la configuration pliée (figure 8), le baffle 40 présente une de ses dimensions totales, ici sa largeur totale It, diminuée par rapport à sa largeur totale en configuration finale (figure 11). En configuration pliée, sa longueur totale n'est pas augmentée par rapport à sa longueur totale en configuration finale. Dans ce mode de réalisation, les dimensions totales du baffle, différentes de celle diminuée en configuration pliée, sont inchangées entre configuration pliée et finale.

Un premier moyen de fixation 151 et un deuxième moyen de fixation 131 sont agencés de sorte que lorsque le premier moyen de fixation 151 est plié vers le premier panneau 41, 45 de manière à former avec celui-ci un angle d'environ 90°, et lorsque le premier panneau 41, 45 et le deuxième panneau 43, 47 sont dans la configuration finale (figure 11), les premiers 151 et deuxièmes 131 moyens de fixation sont automatiquement rapprochés pour être fixés les uns aux autres.

Dans ce mode de réalisation, avant, après, ou de façon simultanée au pliage pour obtenir la configuration pliée, on plie les premiers moyens de fixation 151 vers le premier panneau 41 ou 45 de manière à former avec celui-ci un angle d'environ 90°, comme visible par exemple sur la figure 10. Lorsque le premier panneau 41, 45 et le deuxième panneau 43, 47 sont dans la configuration finale, les premiers moyens de fixation 151 et les deuxièmes moyens de fixation 131 sont automatiquement rapprochés pour être fixés les uns aux autres.

Bien que dans les modes de réalisation illustrés, l'angle α soit plat en configuration initiale et nul en configuration pliée, il est possible d'utiliser d'autres angles.

## Revendications

1. Baffle anti-bruit (1, 40) pour un réservoir (3) d'un véhicule automobile destiné à recevoir un liquide de fonctionnement du véhicule, dans lequel le baffle (1, 40) :
- comprend au moins deux panneaux (13, 15, 17, 41, 43, 45, 47),
- comprend au moins une charnière (19) venue de moulage avec les autres parties du baffle (1, 40),
le baffle (1, 40) étant déformable entre :
- une configuration initiale dans laquelle le baffle (1, 40) n'est pas plié le long de la au moins une charnière (19),
- une configuration pliée dans laquelle le baffle (1, 40) est plié le long de la au moins une charnière (19), et
- une configuration finale dans laquelle le baffle (1, 40) est déplié le long de la au moins une charnière (19),
de sorte que, en configuration pliée, le baffle (1, 40) peut être introduit dans le réservoir (3) par une ouverture (31) de celui-ci,
**caractérisé en ce que** le baffle anti-bruit (1, 40) comprend en outre :
- un premier moyen de fixation (151) formé dans le prolongement d'un premier panneau (15, 41, 45),
- une deuxième charnière (1511) séparant le premier panneau (15, 41, 45) du premier moyen de fixation (151), et
- un deuxième moyen de fixation (131) complémentaire du premier moyen de fixation (151), formé dans le prolongement d'un deuxième panneau (13, 17, 43, 47) adjacent au premier panneau (15, 41, 45), le premier moyen de fixation (151) et le deuxième moyen de fixation (131) étant agencés de sorte que lorsque le premier moyen de fixation (151) est plié vers le premier panneau (15, 41, 45) de manière à former avec celui-ci un angle différant de 180°, et lorsque le premier panneau (15, 41, 45) et le deuxième panneau (13, 17, 43, 47) sont dans la configuration finale, les premiers (151) et deuxièmes (131) moyens de fixation sont automatiquement rapprochés pour être fixés les uns aux autres.

2. Baffle anti-bruit (1) selon la revendication précédente, dans lequel la au moins une charnière (19) sépare deux panneaux (15, 13, 17) adjacents l'un de l'autre.

3. Baffle anti-bruit (40) selon l'une quelconque des revendications précédentes, dans lequel la au moins une charnière (19) sépare deux parties (43A, 43B, 47A, 47B) adjacentes d'un même panneau (43, 47).

4. Baffle anti-bruit selon la revendication précédente, dans lequel le baffle est moulé dans sa configuration initiale.

5. Baffle anti-bruit (40) selon la revendication 3, dans lequel le baffle (40) est moulé sous une forme plate.

6. Baffle anti-bruit (1, 40) selon la revendication précédente ou la revendication 2, dans lequel le baffle (1, 40) comprend à deux extrémités opposées des éléments d'assemblage (41A1, 41B1) aptes à coopérer entre eux pour engager l'assemblage, les éléments d'assemblage (41A1, 41B1) sont de préférence pourvus de formes complémentaires aptes à coopérer entre elles.

7. Baffle anti-bruit (1, 40) selon l'une quelconque des revendications précédentes, dans lequel l'angle différant de 180° est d'environ 90°.

8. Baffle anti-bruit (1, 40) selon l'une quelconque des revendications précédentes, dans lequel au moins un panneau (13, 15, 17, 41, 45) comprend un élément (18) destiné à assurer la fixation du baffle (1, 40) à une paroi du réservoir (3).

9. Réservoir (3) d'un véhicule automobile destiné à recevoir un liquide de fonctionnement du véhicule comprenant un baffle anti-bruit (1, 40) selon l'une quelconque des revendications précédentes, dans lequel le baffle (1, 40) est dans sa configuration finale.

10. Réservoir (3) selon la revendication précédente, dans lequel le baffle (1, 40) est fixé à une paroi du réservoir et la au moins une charnière (19) est perpendiculaire à ladite paroi.

11. Procédé d'installation d'un baffle anti-bruit (1, 40) selon l'une quelconque des revendications 1 à 4, comprenant les étapes suivantes :
- on plie le baffle (1, 40) le long de la au moins une charnière (19),
- on introduit le baffle (1, 40) en configuration pliée dans le réservoir (3) à travers une ouverture (31) de celui-ci,
- on déplie le baffle (1, 40) le long de la au moins une charnière (19) afin que le baffle (1, 40) soit en configuration finale.

12. Procédé selon la revendication précédente, comprenant en outre une étape ultérieure de fixation du baffle (1, 40) à au moins une paroi du réservoir (3).

## Patentansprüche

1. Geräuschdämpfungsvorrichtung (1, 40) für einen Tank (3) eines Kraftfahrzeugs, der zum Aufnehmen einer Betriebsflüssigkeit des Fahrzeugs bestimmt ist, wobei die Geräuschdämpfungsvorrichtung (1, 40):
- wenigstens zwei Platten (13, 15, 17, 41,43, 45, 47) umfasst,
- wenigstens ein Gelenk (19) umfasst, das an die anderen Teile der Geräuschdämpfungsvorrichtung (1, 40) angeformt ist,
wobei die Geräuschdämpfungsvorrichtung (1, 40) verformbar ist zwischen:
- einer anfänglichen Konfiguration, in der die Geräuschdämpfungsvorrichtung (1, 40) entlang des wenigstens einen Gelenks (19) nicht eingeklappt ist,
- einer eingeklappten Konfiguration, in der die Geräuschdämpfungsvorrichtung (1, 40) entlang des wenigstens einen Gelenks (19) eingeklappt ist, und
einer endgültigen Konfiguration, in der die Geräuschdämpfungsvorrichtung (1, 40) entlang des wenigstens einen Gelenks (19) aufgeklappt ist,
so dass die Geräuschdämpfungsvorrichtung (1, 40), in eingeklappter Konfiguration, in den Tank (3) über eine Öffnung (31) von diesem eingeführt werden kann, **dadurch gekennzeichnet,**
**dass** die Geräuschdämpfungsvorrichtung (1, 40) ferner Folgendes umfasst:
- ein erstes Befestigungsmittel (151), das in der Verlängerung einer ersten Platte (15, 41, 45) gebildet ist,
- ein zweites Gelenk (1511), das die erste Platte (15, 41, 45) von dem ersten Befestigungsmittel (151) trennt, und
- ein zweites Befestigungsmittel (131), das zu dem ersten Befestigungsmittel (151) komplementär ist und in der Verlängerung einer zweiten Platte (13, 17, 43, 47), die zu der ersten Platte (15, 41, 45) benachbart ist, gebildet ist, wobei das erste Befestigungsmittel (151) und das zweite Befestigungsmittel (131) derart angeordnet sind, dass, wenn das erste Befestigungsmittel (151) in Richtung der ersten Platte (15, 41, 45) so eingeklappt ist, dass es mit dieser einen Winkel bildet, der von 180° verschieden ist, und wenn die erste Platte (15, 41, 45) und die zweite Platte (13, 17, 43, 47) in der endgültigen Konfiguration sind, das erste Befestigungsmittel (151) und das zweite Befestigungsmittel (131) automatisch angenähert sind, um aneinander befestigt zu sein.

2. Geräuschdämpfungsvorrichtung (1) nach dem vorhergehenden Anspruch, wobei das wenigstens eine Gelenk (19) zwei benachbarte Platten (15, 13, 17) voneinander trennt.

3. Geräuschdämpfungsvorrichtung (40) nach einem der vorhergehenden Ansprüche, wobei das wenigstens eine Gelenk (19) zwei benachbarte Teile (43A, 43B, 47A, 47B) einer gleichen Platte (43, 47) trennt.

4. Geräuschdämpfungsvorrichtung nach dem vorhergehenden Anspruch, wobei die Geräuschdämpfungsvorrichtung in ihrer anfänglichen Konfiguration geformt ist.

5. Geräuschdämpfungsvorrichtung (40) nach Anspruch 3, wobei die Geräuschdämpfungsvorrichtung (40) in einer flächigen Form geformt ist.

6. Geräuschdämpfungsvorrichtung (1, 40) nach dem vorhergehenden Anspruch oder Anspruch 2, wobei die Geräuschdämpfungsvorrichtung (1, 40) an zwei entgegengesetzten Enden Verbindungselemente (41A1, 41B1) umfasst, die imstande sind, miteinander zusammenzuwirken, um die Verbindung einzugehen, wobei die Verbindungselemente (41A1, 41B1) vorzugsweise komplementäre Formen aufweisen, die imstande sind, miteinander zusammenzuwirken.

7. Geräuschdämpfungsvorrichtung (1, 40) nach einem der vorhergehenden Ansprüche, wobei der von 180° verschiedene Winkel etwa 90° beträgt.

8. Geräuschdämpfungsvorrichtung (1, 40) nach einem der vorhergehenden Ansprüche, wobei wenigstens eine Platte (13, 15, 17, 41,45) ein Element (18) umfasst, das dazu bestimmt ist, die Befestigung der Geräuschdämpfungsvorrichtung (1, 40) an einer Wand des Tanks (3) zu bewirken.

9. Tank (3) eines Kraftfahrzeugs, der zum Aufnehmen einer Betriebsflüssigkeit des Fahrzeugs bestimmt ist, umfassend eine Geräuschdämpfungsvorrichtung (1, 40) nach einem der vorhergehenden Ansprüche, wobei die Geräuschdämpfungsvorrichtung (1, 40) in ihrer endgültigen Konfiguration ist.

10. Tank (3) nach dem vorhergehenden Anspruch, wobei die Geräuschdämpfungsvorrichtung (1, 40) an einer Wand des Tanks befestigt ist und das wenigstens eine Gelenk (19) senkrecht zu dieser Wand ist.

11. Verfahren zur Installation einer Geräuschdämpfungsvorrichtung (1, 40) nach einem der Ansprüche 1 bis 4, umfassend die folgenden Schritte:
- Einklappen der Geräuschdämpfungsvorrichtung (1, 40) entlang des wenigstens einen Gelenks (19),
- Einführen der Geräuschdämpfungsvorrichtung (1, 40) in eingeklappter Konfiguration in den Tank (3) durch eine Öffnung (31) von diesem hindurch,
- Aufklappen der Geräuschdämpfungsvorrichtung (1, 40) entlang des wenigstens einen Gelenks (19), damit die Geräuschdämpfungsvorrichtung (1, 40) in endgültiger Konfiguration ist.

12. Verfahren nach dem vorhergehenden Anspruch, ferner umfassend einen weiteren Schritt des Befestigens der Geräuschdämpfungsvorrichtung (1, 40) an wenigstens einer Wand des Tanks (3).

## Claims

1. Anti-noise baffle (1, 40) for a tank (3) of a motor vehicle intended to receive a vehicle operating fluid, in which the baffle (1, 40):
- includes at least two panels (13, 15, 17, 41, 43, 45, 47),
- includes at least one hinge (19) from molding with the other parts of the baffle (1, 40),
the baffle (1, 40) being deformable between:
- an initial configuration in which the baffle (1, 40) is not bent along the at least one hinge (19),
- a folded configuration in which the baffle (1, 40) is bent along the at least one hinge (19), and
- a final configuration in which the baffle (1, 40) is unfolded along the at least one hinge (19),
so that, in the folded configuration, the baffle (1, 40) can be inserted into the tank (3) through an opening (31) of the tank,
**characterized in that** the anti-noise baffle (1, 40) also comprises:
- a first means of attachment (151) formed as an extension of a first panel (15, 41, 45),
- a second hinge (1511) separating the first panel (15, 41, 45) from the first means of attachment (151), and
- a second means of attachment (131) complementary to the first means of attachment (151), formed as an extension of a second panel (13, 17, 43, 47) adjacent to the first panel (15, 41, 45), the first means of attachment (151) and the second means of attachment (131) being arranged in such a way that when the first means of attachment (151) is bent towards the first panel (15), 41, 45) so as to form an angle with the latter differing by 180°, and when the first panel (15, 41, 45) and the second panel (13, 17, 43, 47) are in the final configuration, the first (151) and second (131) means of attachment are automatically brought together to be attached to each other.

2. Anti-noise baffle (1) according to the preceding claim, wherein the at least one hinge (19) separates two adjacent panels (15, 13, 17) from each other.

3. Anti-noise baffle (40) according to any one of the preceding claims, wherein at least one hinge (19) separates two adjacent parts (43A, 43B, 47A, 47B) of a same panel (43, 47).

4. Anti-noise baffle according to the preceding claim, wherein the baffle is molded into its original configuration.

5. Anti-noise baffle (40) according to claim 3, wherein the baffle (40) is molded into a flat shape.

6. Anti-noise baffle (1, 40) according to the preceding claim or claim 2, wherein the baffle (1, 40) comprises at two opposite ends connecting elements (41A1, 41B1) capable of cooperating with each other in initiating the assembly, the connecting elements (41A1, 41B1) are preferably provided with complementary shapes capable of cooperating with each other.

7. Anti-noise baffle (1, 40) according to any one of the preceding claims, wherein the angle differing from 180° is about 90°.

8. Anti-noise baffle (1, 40) according to any one of the preceding claims, wherein at least one panel (13, 15, 17, 41, 45) comprises a member (18) for securing the baffle (1, 40) to a wall of the tank (3).

9. A tank (3) of a motor vehicle for receiving a vehicle operating fluid comprising an anti-noise baffle (1, 40) according to any one of the preceding claims, wherein the baffle (1, 40) is in its final configuration.

10. A tank (3) according to the preceding claim, wherein the baffle (1, 40) is attached to a wall of the tank and the at least one hinge (19) is perpendicular to said wall.

11. A method for installing an anti-noise baffle (1, 40) according to any one of claims 1 to 4, comprising the following steps:
- the baffle (1, 40) is bent along the at least one hinge (19),
- the baffle (1, 40) is inserted in a bent configuration into the tank (3) through an opening (31) of the latter,
- the baffle (1, 40) is unfolded along the at least one hinge (19) so that the baffle (1, 40) is in final configuration.

12. A method according to the preceding claim, further comprising a further step of attaching the baffle (1, 40) to at least one wall of the tank (3).
